# EUROPÄISCHE PATENTSCHRIFT

(11) **EP 2 356 343 B1**
(45) Veröffentlichungstag und Bekanntmachung des Hinweises auf die Patenterteilung: **29.05.2013**
(21) Anmeldenummer: 09756133.6
(22) Anmeldetag: 18.11.2009
(51) Int. Cl.: F16B 7/18, F16B 37/04

(54) **VORRICHTUNG ZUR VERBINDUNG VON ZWEI PROFILSTÜCKEN**
APPARATUS FOR CONNECTING TWO PROFILE PIECES
DISPOSITIF POUR L'ASSEMBLAGE DE DEUX PIÈCES PROFILÉES

(30) Priorität: 20.11.2008 CH 18102008
(43) Veröffentlichungstag der Anmeldung: 17.08.2011
(73) Patentinhaber: Syma Intercontinental AG, 9533 Kirchberg (CH)
(72) Erfinder: ZÜLLIG, Kurt, CH-9533 Kirchberg (CH); STRÄSSLE, Marcel, CH-9533 Kirchberg (CH)
(74) Vertreter: Frischknecht, Harry Ralph
(86) Internationale Anmeldenummer: PCT/CH2009/000366
(87) Internationale Veröffentlichungsnummer: WO 2010/057326

(56) Entgegenhaltungen:
- FR-A- 2 868 159
- US-A1- 2005 002 729

## Beschreibung

### TECHNISCHES GEBIET

Die vorliegende Erfindung betrifft ein System bzw. eine Vorrichtung zum lösbaren Verbinden von zwei Profilstücken.

### STAND DER TECHNIK

Aus dem Stand der Technik sind eine Vielzahl von Systemen zur Verbindung von zwei Profilelementen oder Profilstücken bekannt. Profilelemente dienen beispielsweise im Messebau der Aufnahme von Paneelen, um abgetrennte Bereiche oder Informationsflächen zu schaffen. Solche Paneelen können beispielsweise mit Informationen oder graphischen Darstellungen bedruckt sein.

Bezüglich mechanischer Festigkeit und Stabilität sind die aus dem Stand der Technik bekannten Systeme sehr gut. Diese Systeme lassen sich bei aufwändigen Messebauten, welche bei Messen eingesetzt werden, die einige Tage oder gar Wochen dauern, gut einsetzen.

Allerdings hat die Praxis gezeigt, dass der Aufbau der bekannten Systeme bei zeitlich kurzen Veranstaltungen, wie etwa bei einer Generalversammlung eines Unternehmens oder bei einer Verkaufsveranstaltung, zu komplex ist und eine vergleichsweise lange Zeitdauer in Anspruch nimmt. Meist sind bei solchen Veranstaltungen die Anforderungen an die Komplexität eines Aufbaus um ein mehrfaches geringer, als bei den oben erwähnten Veranstaltungen. Dieser Umstand wird bei aus dem Stand der Technik bekannten Systemen noch nicht genügend berücksichtigt.

US 2005/0002729 zeigt ein System mit einem Profil und einem dazugehörigen Befestigungselement. Das Befestigungselement wird über Nutensteine zum Profil geklemmt.

### DARSTELLUNG DER ERFINDUNG

Ausgehend vom Stand der Technik liegt der Erfindung eine Aufgabe zugrunde, ein Verbindungsprofil anzugeben, welches das Verbinden von Profilstücken im Messebau erleichtert. Insbesondere sollen zwei Profilstücke ohne dem Einsatz von Werkzeugen verbindbar sein.

Demgemäss umfasst ein Verbindungsprofil zum lösbaren Verbinden mit einem zweiten Verbindungsprofil ein sich entlang einer Längsachse erstreckendes Profilstück mit mindestens einen länglichen Kanal, der sich von einer Oberfläche in das Profilstück erstreckt und entlang der Längsachse verläuft. Weiterhin ist mindestens ein Verbindungselement vorgesehen, das mit dem Profilstück in Verbindung steht, wobei das Verbindungselement mit dem länglichen Kanal einen Aufnahmeraum schafft, in welchen ein anderes Verbindungselement des zweiten Verbindungsprofils einragen kann.

Zwei solche Verbindungsprofile lassen sich ohne Werkzeug lösbar miteinander in einfacher Art und Weise verbinden.

Vorzugsweise ist die Höhe des Verbindungselementes im Bereich des Aufnahmeraumes kleiner oder gleich der Tiefe des Kanals. Dadurch kann das eine Verbindungselement in den durch das andere Verbindungselement bereitgestellten Aufnahmeraum einragen. Bei der letzteren Variante kann eine leicht klemmende Verbindung geschaffen werden.

Vorzugsweise ist die Oberfläche des Verbindungselementes, welche der Oberfläche des Profilstückes zugewandt ist, mit der letzteren bündig. Alternativ steht die Oberfläche des Verbindungselementes, welche der Oberfläche des Profilstückes zugewandt ist, über der letzteren, so dass im Bereich des Aufnahmeraumes ein Spalt zwischen dem Profilstück und dem Verbindungselement geschaffen wird.

Vorzugsweise umfasst das Verbindungselement einen in den Kanal einragenden Klemmabschnitt und einen Einhakabschnitt, welcher sich vom Klemmabschnitt über die Oberfläche des Profilstückes erstreckt.

Der Einhakabschnitt umfasst vorzugsweise einen Wirkabschnitt, welcher sich vom Klemmabschnitt in mindestens eine Richtung entlang einer Mittelachse erstreckt. Der Aufnahmeraum wird dabei im Bereich des Wirkabschnittes bereitgestellt.

Der Aufnahmeraum wird vorzugsweise durch den Kanal, den Einhakabschnitt, insbesondere durch den Wirkabschnitt, und den Klemmabschnitt begrenzt.

Vorzugsweise ist der längliche Kanal als hinterschnittener Kanal ausgebildet. Dabei erstreckt sich der längliche Kanal von der Oberfläche mit einem ersten Abschnitt und einem sich daran anschliessenden zweiten Abschnitt in das Profilstück, wobei der erste Abschnitt einen kleineren Querschnitt als der zweite Abschnitt aufweist.

Vorzugsweise erstreckt sich der Einhakabschnitt in Richtung der Längsachse des jeweiligen Profilstückes erstreckt, wenn das Verbindungselement mit dem Profilstück in Verbindung steht.

Vorzugsweise weist der Einhakabschnitt quer zur Längsrichtung eine Breite auf, welche kleiner ist als die Breite des Kanals.

Vorzugsweise erstreckt sich der Wirkabschnitt des Einhakabschnittes bezüglich des Klemmabschnittes entlang der Längsachse in eine einzige Richtung oder in zwei entgegengesetzte Richtungen.

Besonders bevorzugt ist das Verbindungselement, welches mit dem einen Profilstück in Verbindung steht, identisch zu dem Verbindungselement ausgebildet, welches mit dem anderen Profilstück in Verbindung steht. Dies bringt Vorteile bei der Montage der Verbindungselemente. Zudem sind die Toleranzbereiche bei beiden Verbindungselementen gleich, was ein unkompliziertes Zusammenfügen der beiden Profilstücke erlaubt.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Ansicht von der Stirnseite eines Verbindungssystems zur Verbindung von zwei Profilen;
- Fig. 2: eine Schnittansicht entlang der Schnittlinie II-II von Figur 1 mit einem Verbindungselement nach einer ersten Ausführungsform;
- Fig. 3 - 5: Ansichten eines Verbindungselementes nach der ersten Ausführungsform;
- Fig. 6: eine Schnittansicht entlang der Schnittlinie II-II von Figur 1 mit einem Verbindungselement nach einer zweiten Ausführungsform; und
- Fig. 7 - 9: Ansichten eines Verbindungselementes nach der zweiten Ausführungsform.

### BESCHREIBUNG BEVORZUGTER AUSFÜHRUNGSFORMEN

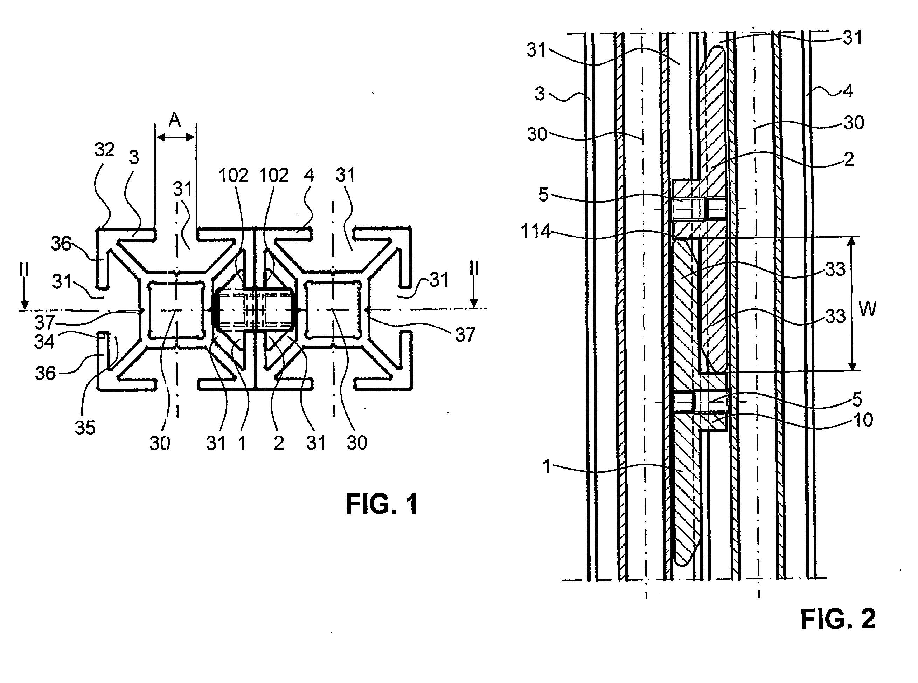

Die Figur 1 zeigt eine Ansicht eines Profilverbindungssystems zum lösbaren Verbinden zweier Profilstücke, hier die Profilstücke 3 und 4, mittels mehrerer Verbindungselemente, hier die Verbindungselemente 1 und 2. Das Profilstück 3 steht dabei mit dem Verbindungselement 1 und das Profilstück 4 steht mit dem Verbindungselement 2 in Verbindung.

Die Verbindungselemente 1 und 2 sind vorzugsweise lösbar mit den jeweiligen Profilstücken 3 und 4 verbunden. Aufgrund der Anordnung der Verbindungselemente 1 und 2 kann zwischen den beiden Profilstücken 3 und 4 eine lösbare Verbindung geschaffen werden, wobei für das Herstellen und Trennen der Verbindung zwischen dem Profilstück 3 und dem Profilstück 4 kein Werkzeug benötigt wird. Im verbundenen Zustand ist das Profilstück 3 parallel zum Profilstück 4 angeordnet.

Die in der Figur 1 gezeigten Profilstücke 3 und 4 sind baugleich ausgebildet. Das Profilstück erstreckt sich entlang einer Längsachse 30. In der vorliegenden Ausführungsform hat das Profilstück einen quadratischen Aussenquerschnitt, wobei sich an jeder Seite eine Nut oder ein Kanal 31 in Richtung der Längsachse 30 von der Oberfläche 32 in das Profilstück erstreckt. Die Form des Querschnittes des Profils und die Anzahl der Kanäle 31 ist unwesentlich. Wichtig ist, dass mindestens ein Kanal 31 angeordnet ist, welcher sich in Richtung der Längsachse 30 erstreckt. Vorzugsweise dient ein am Profil angeordneter Kanal 31 der Aufnahme der Verbindungselemente 1 und 2 und ein anderer am Profil angeordneter Kanal 31 dient der Aufnahme von Paneelen oder anderen im Messebau verwendeten Elementen. Die Profilstücke 3, 4 müssen nicht zwingend baugleich sein.

Der Kanal 31 erstreckt sich von der Oberfläche 32 mit einem ersten Abschnitt 34 und einem anschliessend angeordneten zweiten Abschnitt 35 in das Profilstück hinein. Der erste Abschnitt 34 weist einen kleineren Querschnitt als der zweite Abschnitt 35 auf. Mit anderen Worten kann auch gesagt werden, dass der Kanal 31 die Form eines hinterschnittenen Kanals aufweist, wobei die Hinterschneidung durch den zweiten Abschnitt 35 gebildet wird und durch in den Kanal ragende Stege 36 im Bereich des den ersten Abschnitt 34 begrenzt wird. In dieser Ausführungsform verjüngt sich der zweite Abschnitt 35 in senkrechter Richtung zur Längsachse 30 des Profilstückes. Dem zweiten Abschnitt schliesst sich der Kanalgrund 37 an.

In der Figur 1 ist die lichte Weite des ersten Abschnittes 34 mit dem Bezugszeichen A angegeben.

In anderen Ausführungsformen kann der Kanal 31 beispielsweise die Form einer T-Nut haben. Dabei würde der zweite Abschnitt 35 mit einem konstanten Querschnitt verlaufen.

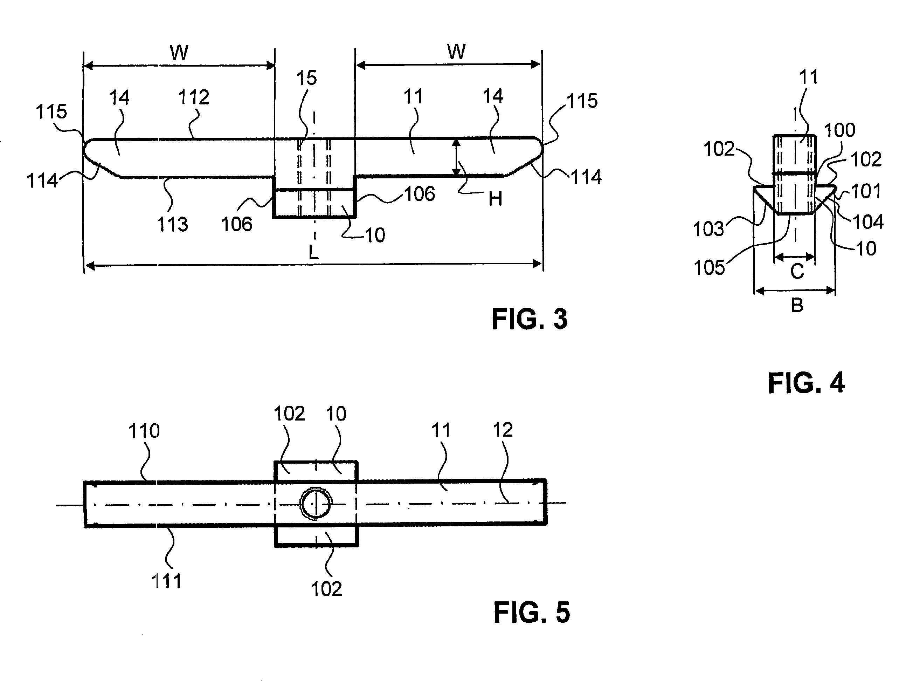

Die Figur 3 bis 5 zeigen eine erste Ausführungsform eines Verbindungselementes 1 bzw. 2 in drei Ansichten. Das Verbindungselement umfasst einen Klemmabschnitt 10 und einen Einhakabschnitt 11, welcher sich im wesentlichen entlang einer Achse 12 erstreckt. Der Klemmabschnitt 10 dient im wesentlichen der Führung und Verbindung des Verbindungselementes mit dem jeweiligen Profilstück 3, 4. Der Einhakabschnitt 11 dient im wesentlichen der Bereitstellung eines Aufnahmeraumes 33, in welchen der Einhakabschnitt 11 des mit dem benachbarten Profil verbundenen Verbindungselementes einragen bzw. einhaken kann.

Der Einhakabschnitt 11 hat eine quaderförmige Aussenform mit Seitenflächen 110, 111, einer oberen Fläche 112, einer unteren Fläche 113, sowie Stirnflächen 114. Die Seitenflächen 110 und 111 verlaufen parallel zueinander und stehen im wesentlichen senkrecht zu der oberen Fläche 112 bzw. der unteren Fläche 113. Die Stirnflächen 114 sind hier abgeschrägt ausgebildet. Dabei erstreckt sich die jeweilige Stirnfläche 114 winklig zur unteren Fläche 113. Der Übergang von der Stirnfläche 114 zur oberen Fläche 112 ist hier mit einer Rundung 115 ausgebildet. Der Einhakabschnitt 11 weist eine Länge L auf. Ferner weist der Einhakabschnitt 11 Wirkabschnitte 14 auf, welche eine Wirklänge W aufweisen.

Über die untere Fläche 113 ist dem Einhakabschnitt 11 der Klemmabschnitt 10 angeformt. Der Klemmabschnitt 10 erstreckt sich im wesentlichen senkrecht von der unteren Fläche 113. In Richtung der Mittelachse 12 gesehen weist der Klemmabschnitt 10 in einem ersten Teilabschnitt 100 eine kleinere Länge als der Einhakabschnitt 11 auf, verläuft aber mit der gleichen Breite C. Anschliessend geht der Teilabschnitt 100 über den Teilabschnitt 101 über. Dabei verbreitert sich der Klemmabschnitt 10 über die beiden Kontaktflächen 102, welche im wesentlich senkrecht zu den beiden Seitenflächen 110 und 111 verlaufen, auf die Breite B. In der vorliegenden Ausführungsform umfasst der Klemmabschnitt winklig zueinander verlaufende Seitenflächen 103 und 104, welche sich bis zu einer unteren Oberfläche 105 erstrecken. Stirnseitig wird der Klemmabschnitt 10 mit zwei Stirnflächen 106 begrenzt.

Die Breite C des Einhakabschnittes 11 wird dabei kleiner als die lichte Weite A des Kanals gewählt, so dass der Einhakabschnitt 11 gut in den Kanal 31 des gegenüberliegenden Profilstückes einragen kann.

Die Dicke oder Höhe H des Einhakabschnittes 11 ist entweder gleich der Tiefe des Kanals 31 oder kleiner als die Tiefe des Kanals 31.

Im verbundenen Zustand steht ist die untere Fläche 113 entweder bündig mit der Oberfläche 32 des Profils oder über der Oberfläche 32, so dass zwischen der unteren Fläche 113 und der Oberfläche 32 im Querschnitt gesehen ein Spalt vorhanden ist.

In der vorliegenden Ausführungsform ist der Klemmabschnitt 10 mittig zwischen den beiden Stirnflächen 114 des Einhakabschnittes 11 zwischen den beiden Wirkabschnitten 14 angeordnet. Mit anderen Worten kann auch gesagt werden, dass sich der Einhakabschnitt 10 auf beide Seiten zum Klemmabschnitt 10 erstreckt. In anderen Ausführungsformen ist eine andere Anordnung des Einhakabschnittes 11 denkbar. Beispielsweise ist es denkbar, den Einhakabschnitt 11 im Bereich der einen Stirnfläche 114 anzuordnen, wobei sich dann der Einhakabschnitt von Klemmabschnitt nur in eine einzige Richtung erstreckt. Bei dieser Ausführungsform wird dann ein einziger Wirkabschnitt 14 bereitgestellt.

In der vorliegenden Ausführungsform erstreckt sich eine Gewindeöffnung 15 durch den Klemmabschnitt 11 und durch den Einhackabschnitt 10. Die Gewindeöffnung dient der Aufnahme einer Stiftschraube 5, welche das Verbindungselement 1 mit dem jeweiligen Profilstück verbindet. Die Gewindeöffnung 15 erstreckt sich dabei vollständig durch die

In der Figur 2 wird die Verbindung des Verbindungselementes 1 bzw. 2 mit dem Profilstück 3 bzw. 4 gezeigt. Dabei wird das Verbindungselement 1 mit dem Klemmabschnitt 10 in Kanal 31 eingesetzt und bezüglich der Längsachse an der gewünschten Stelle platziert. Durch Eindrehen der Stiftschraube 5 kann das Verbindungselement bezüglich des Kanals 31 verspannt werden. Dabei steht die Stiftschraube 5 am Grund des Kanals 31 auf und drückt das Verbindungselement 1 mit den Kontaktflächen 102 gegen die Stege 36, welche den Kanal 31 verengen. Somit kann eine kraftschlüssige Verbindung zwischen dem Verbindungselement 1 bzw. 2 mit dem jeweiligen Profilstück 3 bzw. 4 geschaffen werden. Der Kanalgrund 37 ist dabei im wesentlichen flach ausgebildet. Gleiches gilt für die Stirnfläche der Stiftschraube 5, welche mit dem Kanalgrund 37 in Verbindung sind.

Der Einhakabschnitt 11 erstreckt sich im verbundenen Zustand in Richtung der Längsachse 30 des Profils. Durch den Kanal 31 und die untere Fläche 113 wird ein Aufnahmeraum 33 geschaffen. Der Aufnahmeraum 33 weist in Richtung der Längsachse 30 im wesentlichen eine Länge auf, welche der Wirklänge W entspricht.

Das Profilstück 3 mit dem Verbindungselement 1 kann nun derart zum Profilstück 4 mit dem Verbindungselement 2 angeordnet werden, dass sich die jeweiligen Einhakabschnitte 11 in den Kanal 31 des gegenüberliegenden anderen Profilstückes 3 bzw. 4 erstrecken. Das heisst, dass der Einhakabschnitt 11 des Verbindungselementes 1, welches mit dem Profilstück 3 in Verbindung steht, in den Kanal 31 des Profilstückes 4 einragt. Der Einhakabschnitt 11 des Verbindungselementes 2, welches mit dem Profilstück 4 in Verbindung steht, ragt dabei in den Kanal 31 des Profilstückes 3 ein. Durch ein relatives Verschieben der beiden Profilstücke 3, 4 zueinander, kann nun das Verbindungselement 1 mit seinem Einhakabschnitt 11 in den durch den Einhakabschnitt 11 des anderen Verbindungselementes 2 bereitgestellten Aufnahmeraum 33 einragen und umgekehrt. Durch dieses Einragen oder Einhaken können die beiden Profilstücke 3 und 4 miteinander verbunden werden. Die beiden Profilstücke 3 und 4 verlaufen hier parallel zueinander.

Die Länge des Aufnahmeraumes 33 stellt eine grosse Toleranz bezüglich der Positionierung der Verbindungselemente 1 und 2 bereit. Auch wenn die Einhakabschnitte 11 jeweils nur teilweise in den entsprechenden Aufnahmeraum 33 einragen, kann eine sichere Verbindung gewährleistet werden. Dadurch kann auf eine genaue Positionierung der Verbindungselemente 1 bzw. 2 an den jeweiligen Profilstücken 3, 4 verzichtet werden.

In der Figur 2 stösst das Verbindungselement 1 mit seiner Stirnfläche 114 am Klemmabschnitt 10 des Verbindungselementes 2 an. Die beiden Verbindungselemente 1 und 2 berühren sich demnach auf Stoss. In einer anderen Ausführungsform können die Verbindungselemente 1 und 2 derart angeordnet sein, dass der Klemmabschnitt 10 nicht mit der Stirnfläche 114 in Berührung steht. In dieser Ausführungsform berühren sich die Verbindungselemente 1 und 2 nicht auf Stoss.

Die abgeschrägte Ausgestaltung der Stirnflächen 114 bieten den Vorteil, dass während des Verbindungsvorgangs eine Einlaufstrecke gebildet wird, welche das Einführen des jeweiligen Einhakabschnittes 11 in den entsprechenden Aufnahmeraum 33 erleichtert.

Wie aus den Figuren erkannt werden kann, ist das Verbindungselement 1, welches mit dem Profilstück 4 in Verbindung steht, vorzugsweise identisch zum Verbindungselement 2 ausgebildet, welches mit dem Profilstück 3 in Verbindung steht. Die identische Ausbildung hat den Vorteil, dass der Vorgang des Verbindens des jeweiligen Verbindungselementes 1, 2 mit dem entsprechenden Profilstück 3, 4 für den Benutzer einfach gestaltet wird.

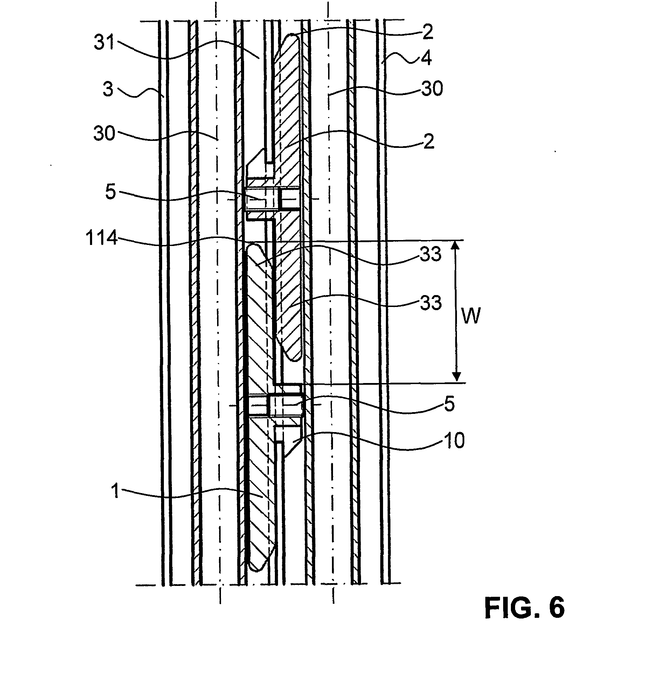

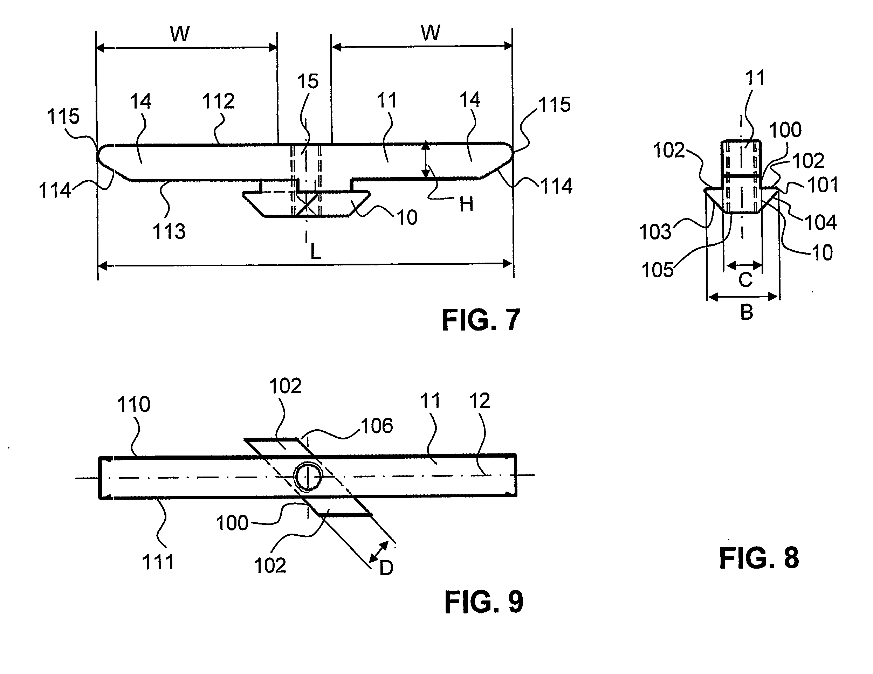

Die Figur 6 zeigt eine Schnittdarstellung entlang der Schnittlinie II-II, wobei hier eine weitere Ausführungsform des Verbindungselementes nach den Figuren 7 bis 9 eingesetzt wird. Gleiche Teile sind dabei mit gleichen Bezugszeichen versehen.

Abgesehen vom Klemmabschnitt 11 ist das Verbindungselement 1 nach dieser Ausführungsform im wesentlichen identisch zur ersten Ausführungsform ausgebildet. Der Klemmabschnitt 11 weist in dieser Ausführungsform abgeschrägt ausgebildete Stirnfläche 106 auf. Die Stirnfläche 106 stehen hier mit einem Winkel von 45° zur Längsachse 12. Alternativ können die Stirnfläche 106 auch in einem anderen Winkel zur Längsachse 11 stehen. Die Stirnflächen 106 stehen mit einem Abstand D beabstandet zueinander. Der Abstand D ist dabei kleiner als die Breite des ersten Abschnittes des Kanals 31.

Aufgrund der abgeschrägt ausgebildeten Stirnflächen 106 kann das Verbindungselement 1 senkrecht zur Längsachse 30 in den Kanal 31 eingeführt werden. Dabei wird das Verbindungselement 1 derart zum Kanal 31 ausgerichtet, dass die beiden Stirnflächen parallel zur Langsachse 30 liegen. Anschliessend kann das Verbindungselement 1 in den Kanal 31 einschoben werden. Sobald die Kontaktflächen 102 unterhalb des Steges 36 liegen, kann das Verbindungselement 1 verdreht und derart ausgerichtet werden, dass der Einhakabschnitt 11 parallel zum Kanal 31 verläuft. Dabei stehen die Kontaktflächen 102 mit dem Steg 36 in Verbindung.

In einer weiteren Ausführungsfonn können die Verbindungselemente 1, 2 auch fest, also nicht lösbar mit den Profilstücken 3, 4 in Verbindung stehen. Beispielsweise ist es denkbar, die Verbindungselemente 1, 2 über eine formschlüssige oder kraftschlüssige Verbindung mit dem jeweiligen Profilstück zu verbinden. Eine solche Ausführungsform ist insbesondere dann Vorteilhaft, wenn der Benutzer immer wieder den gleichen Aufbau bereitstellen möchte.

Zudem ist es denkbar, dass die Verbindungselemente 1, 2 in regelmässigen Abständen am jeweiligen Profilstück, wie soeben beschrieben, fest angebracht werden, so dass der Benutzer die Profilstücke auf die von ihm gewünschte Länge beschaffen kann und diese sogleich einsetzen kann.

Das Verbindungselement 1 wird vorzugsweise mit einem Aluminium-Druckgussverfahren hergestellt.

Vorzugsweise werden an einem einzigen Profilstück 3, 4 eine vordefinierte Anzahl von Verbindungselementen 1 pro Längeneinheit eingesetzt. Beispielsweise können pro Laufmeter zwei, drei, vier oder mehr Verbindungselemente 1 eingesetzt werden.

Die Profilstücke 3, 4 können zudem mit in regelmässigen Abständen angeordneten Markierungen versehen sein, welche dem Montagepersonal als Positionierhilfe der Verbindungselemente 1, 2 dienen. Dabei kann verhindert werden, dass die Verbindungselement 1, 2 an einer falschen Position angebracht werden.

Anstelle der Stiftschraube, wäre es auch denkbar ein Federmittel vorzusehen, welches mit dem Klemmabschnitt 10 in Verbindung steht. Das Federmittel ist dabei derart angeordnet, dass es auf den Kanalgrund 37 wirken kann, und dabei das Verbindungselement 1 über die Kontaktflächen 102 des Befestigungsabschnittes 10 gegen die Stege 36, welche den Kanal 31 verengen drückt. Beispielsweise kann das Federmittel derart ausgebildet sein, dass es mit der Gewindeöffnung 15 oder mit unteren Oberfläche 105 im Eingriff ist.

### BEZUGSZEICHENLISTE

| | | | |
|---|---|---|---|
| 1 | erstes Verbindungselement | 102 | Kontaktflächen |
| 2 | zweites Verbindungselement | 103 | Seitenflächen |
| 3 | Profilstück | 104 | Seitenfläche |
| 4 | Profilstück | 105 | untere Oberfläche |
| 5 | Stiftschraube | 106 | Stirnfläche |
| 10 | Klemmabschnitt | 110 | Seitenfläche |
| 11 | Einhakabschnitt | 111 | Seitenfläche |
| 12 | Mittelachse | 112 | untere Fläche |
| 14 | Wirkabschnitt | 113 | obere Fläche |
| 15 | Gewindeöffnung | 114 | Stirnflächen |
| 30 | Längsachse | 115 | Rundung |
| 31 | länglicher Kanal, Nut | A | Breite des Kanals 31 beim ersten Abschnitt |
| 32 | Oberfläche | | |
| 33 | Aufnahmeraum | B | Breite des Klemmabschnittes |
| 34 | erster Abschnitt | C | Breite des Einhakabschnittes |
| 35 | zweiter Abschnitt | L | Länge des Einhakabschnittes |
| 36 | Steg | W | Länge des Wirkabschnittes |
| 37 | Kanalgrund | H | Höhe des Einhakbschnittes |
| 100 | erster Teilabschnitt | | |
| 101 | zweiter Teilabschnitt | | |

## Patentansprüche

1. Verbindungsprofil zum lösbaren Verbinden mit einem zweiten Verbindungsprofil (4), umfassend ein sich entlang einer Längsachse (30) erstreckendes Profilstück (3) mit mindestens einen länglichen Kanal (31), der sich von einer Oberfläche (32) in das Profilstück (3) erstreckt und entlang der Längsachse (30) verläuft, weiterhin umfassend mindestens ein Verbindungselement (1), das mit dem Profilstück (3) in Verbindung steht, wobei das Verbindungselement (1) mit dem länglichen Kanal (31) einen Aufnahmeraum (33) schafft, in welchen ein anderes Verbindungselement (2) des zweiten Verbindungsprofil (4) einragen kann, **dadurch gekennzeichnet, dass** die Oberfläche des Verbindungselementes (1, 2), welche der Oberfläche (32) des Profilstückes zugewandt ist, mit der letzteren bündig ist, oder dass die Oberfläche des Verbindungselementes (1, 2), welche der Oberfläche (32) des Profilstückes zugewandt ist, über der letzteren steht, so dass im Bereich des Aufnahmeraumes (33) ein Spalt zwischen dem Profilstück (3, 4) und dem Verbindungselement (1, 2) geschaffen wird.

2. Verbindungsprofil nach Anspruch 1, **dadurch gekennzeichnet, dass** die Höhe (H) des Verbindungselementes (1, 2) im Bereich des Aufnahmeraumes kleiner oder gleich der Tiefe des Kanals (31) ist.

3. Verbindungsprofil nach einem der vorhergehenden Ansprüche, **dadurch gekennzeichnet, dass** das Verbindungselement (1, 2) einen in den Kanal einragenden Klemmabschnitt (10) und einen Einhakabschnitt (11) umfasst, welcher sich vom Klemmabschnitt (10) über die Oberfläche (32) des Profilstückes (3) erstreckt.

4. Verbindungsprofil nach einem der vorhergehenden Ansprüche, **dadurch gekennzeichnet, dass** der Einhakabschnitt (11) einen Wirkabschnitt (14) umfasst, welcher sich vom Klemmabschnitt (10) in mindestens eine Richtung entlang einer Mittelachse (12) erstreckt.

5. Verbindungsprofil nach einem der vorgehenden Ansprüche, **dadurch gekennzeichnet, dass** der Aufnahmeraum (33) durch den Kanal (31), den Einhakabschnitt (11), insbesondere durch den Wirkabschnitt (14), und den Klemmabschnitt (10) begrenzt wird.

6. Verbindungsprofil nach einem der vorhergehenden Ansprüche, **dadurch gekennzeichnet, dass** sich der längliche Kanal (31) von der Oberfläche mit einem ersten Abschnitt (34) und einem sich daran anschliessenden zweiten Abschnitt (35) in das Profilstück (3, 4) erstreckt, wobei der erste Abschnitt (34) einen kleineren Querschnitt als der zweite Abschnitt (35) aufweist.

7. Verbindungsprofil nach einem der vorhergehenden Ansprüche, **dadurch gekennzeichnet, dass** die Länge des Aufnahmeraumes (33) entlang der Mittelachse (30) im wesentlichen der Länge (W) des Wirkabschnittes (14) entspricht.

8. Verbindungsprofil nach einem der vorhergehenden Ansprüche, **dadurch gekennzeichnet, dass** wenn das Verbindungselement (1, 2) mit dem Profilstück in Verbindung steht, sich der Einhakabschnitt (11) in Richtung der Längsachse (30) des jeweiligen Profilstückes (3, 4) erstreckt.

9. Verbindungsprofil nach einem der vorhergehenden Ansprüche, **dadurch gekennzeichnet, dass** der Einhakabschnitt (11) quer zur Längsrichtung eine Breite (C) aufweist, welche kleiner ist als die Breite (A) des Kanals (31).

10. Verbindungsprofil nach einem der vorhergehenden Ansprüche, **dadurch gekennzeichnet, dass** sich der Wirkabschnitt (14) des Einhakabschnittes (11) bezüglich des Klemmabschnittes (10) entlang der Längsachse (12) in eine einzige Richtung oder in zwei entgegengesetzte Richtungen erstreckt.

11. Verbindungsprofil nach einem der vorhergehenden Ansprüche, **dadurch gekennzeichnet, dass** der Klemmabschnitt (10) im wesentlichen die Form des Kanals (31) aufweist, so dass das Verbindungselement (1) entlang der Längsrichtung (30) von der Stirnseite her in den Kanal (31) einführbar und verschiebbar ist.

12. Verbindungsprofil nach einem der vorhergehenden Ansprüche, **dadurch gekennzeichnet, dass** der Klemmabschnitt (10) winklig zur Längsachse (12) angeordnete Stirnflächen (106) umfasst, welche mit einem Abstand (D) zueinander stehen, wobei der Abstand (D) kleiner als die Breite (A) des Kanals (31) ausgebildet ist, so dass das Verbindungselement (1) senkrecht zur Längsrichtung (30) in den Kanal (31) einführbar ist und anschliessend durch eine Drehbewegung derart ausgerichtet werden kann, dass die Mittelachse (12) des Verbindungsabschnittes (10) parallel zur Längsachse (30) des Profilstückes (3, 4) verläuft.

13. Verbindungsprofil nach einem der vorhergehenden Ansprüche, **dadurch gekennzeichnet, dass** im verbundenen Zustand die Längsachse (30) eines ersten Profils (3) parallel zur Längsachse (30) eines zweiten Profils (4) verläuft.

14. Verbindungsprofil nach einem der vorhergehenden Ansprüche, **dadurch gekennzeichnet, dass** das Verbindungselement (1) mit einem Befestigungsmittel, wie einem Schraubenmittel (5), einem Federmittel oder einem Klemmmittel mit dem jeweiligen Profilstück verbindbar ist, wobei das Befestigungsmittel mit dem Kanalgrund (37) im Eingriff ist und das Verbindungselement mit den Kontaktflächen (102) gegen die Stege (36) des Kanals (31) drückt.

15. Verbindungsprofil nach einem der vorhergehenden Ansprüche, **dadurch gekennzeichnet, dass** das Verbindungselement (1) eine Gewindeöffnung (15) umfasst, in welcher eine Stiftschraube (5) platzierbar ist, wobei das Verbindungselement (1) mit der Stiftschraube (5) gegenüber dem Kanal (31) verspannbar ist, wobei die Stiftschraube am Kanalgrund (37) aufsteht und das Verbindungselement (1) mit den Kontaktflächen (102) gegen die Stege (36) des Kanals (31) drückt.

## Claims

1. A connecting profile for detachably connecting to a second connecting profile (4), comprising a profile piece (3) extending along a longitudinal axis (30) and having at least one elongated channel (31) that extends from a surface (32) into the profile piece (3) and runs along the longitudinal axis (30), further comprising at least one connecting element (1) that is connected to the profile piece (3), wherein the connecting element (1) together with the elongated channel (31) creates a receiving space (33) into which another connecting element (2) of the second connecting profile (4) can protrude, **characterized in that** the surface of the connecting element (1, 2), which surface faces the surface (32) of the profile piece, is flush with the latter, or that the surface of the connecting element (1, 2), which surface faces the surface (32) of the profile piece, stands above the latter so that in the region of the receiving space (33) a gap is created between the profile piece (3, 4) and the connecting element (1, 2).

2. The connecting profile according to claim 1, **characterized in that** the height (H) of the connecting element (1, 2) is smaller than or equal to the depth of the channel (31).

3. The connecting profile according to any one of the preceding claims, **characterized in that** the connecting element (1, 2) comprises a clamping portion (10) protruding into the channel and a hooking portion (11) which extends from the clamping portion (10) over the surface (32) of the profile piece (3).

4. The connecting profile according to any one of the preceding claims, **characterized in that** the hooking portion (11) comprises an active portion (14) which extends from the clamping portion (10) in at least one direction along a center axis (12).

5. The connecting profile according to any one of the preceding claims, **characterized in that** the receiving space (33) is delimited by the channel (31), the hooking portion (11), in particular by the active portion (14), and by the clamping portion (10).

6. The connecting profile according to any one of the preceding claims, **characterized in that** the elongated channel (31) extends from the surface with a first portion (34) and extends with a second portion (35) connected thereto into the profile piece (3, 4), wherein the first portion (34) has a smaller cross-section than the second portion (35).

7. The connecting profile according to any one of the preceding claims, **characterized in that** the length of the receiving space (33) along the center axis (30) corresponds substantially to the length (W) of the active portion (14).

8. The connecting profile according to any one of the preceding claims, **characterized in that** when the connecting element (1, 2) is connected to the profile piece, the hooking portion (11) extends in the direction of the longitudinal axis (30) of the respective profile piece (3, 4).

9. The connecting profile according to any one of the preceding claims, **characterized in that** the hooking portion (11) has a width (C) transverse to the longitudinal direction which width is smaller than the width (A) of the channel (31).

10. The connecting profile according to any one of the preceding claims, **characterized in that** the active portion (14) of the hooking portion (11) extends with regard to the clamping portion (10) along the longitudinal axis (12) in a single direction or in two opposite directions.

11. The connecting profile according to any one of the preceding claims, **characterized in that** the clamping portion (10) has substantially the shape of the channel (31) so that the connecting element (1) can be inserted and moved in the channel (31) from the front side along the longitudinal direction (30).

12. The connecting profile according to any one of the preceding claims, **characterized in that** the clamping portion (10) comprises front faces (106) which are arranged angularly to the longitudinal axis (12) and which have a distance (D) from each other, wherein the distance (D) is formed smaller than the width (A) of the channel (31) so that the connecting element (1) can be inserted perpendicular to the longitudinal direction (30) into the channel (31) and can subsequently be aligned by means of a rotational movement in such a manner that the center axis (12) of the connecting portion (10) runs parallel to the longitudinal axis (30) of the profile piece (3, 4).

13. The connecting profile according to any one of the preceding claims, **characterized in that** in the connected state, the longitudinal axis (30) of a first profile (3) runs parallel to the longitudinal axis (30) of a second profile (4).

14. The connecting profile according to any one of the preceding claims, **characterized in that** the connecting element (1) can be connected to the respective profile piece with a fastening means such as a screwing means, a spring means or a clamping means, wherein the fastening means is in engagement with the channel bottom (37) and pushes the connecting element with the contact surfaces (102) against the webs (36) of the channel (31).

15. The connecting profile according to any one of the preceding claims, **characterized in that** the connecting element (1) comprises a threaded opening (15) into which a stud screw (5) can be placed, wherein the connecting element (1) can be braced with the stud screw (5) against the channel (31), wherein the stud screw abuts against the channel bottom (37) and pushes the connecting element (1) with the contact surfaces (102) against the webs (36) of the channel (31).

## Revendications

1. Profilé d'assemblage pour assemblage amovible avec un deuxième profilé d'assemblage (4) comprenant une pièce profilée (3) s'étendant le long d'un axe longitudinal (30) avec au moins un conduit oblong qui s'étend d'une surface supérieure (32) dans la pièce profilée (3) et passe le long de l'axe longitudinal, comprenant en plus au moins un élément d'assemblage (1) qui est en liaison avec la pièce profilée (3), l'élément d'assemblage (1) créant avec le conduit (31) longitudinal un espace de réception (33) dans lequel un autre élément d'assemblage (2) du deuxième profilé d'assemblage (4) peut s'insérer **caractérisé en ce que** la surface supérieure de l'élément d'assemblage (1,2) tournée vers la surface supérieure (32) de la pièce profilée, forme avec cette dernière une surface plane ou **en ce que** la surface supérieure de l'élément d'assemblage (1,2) tournée vers la surface supérieure (32) de la pièce profilée, est située au-dessus de cette dernière de sorte que dans la zone de l'espace de réception (33) un interstice est créé entre la pièce profilée (3, 4) et l'élément d'assemblage (1, 2).

2. Profilé d'assemblage selon la revendication 1 **caractérisé en ce que** la hauteur (H) de l'élément d'assemblage (1, 2) est plus petite ou égale à la profondeur du conduit (31) dans la zone de l'espace de réception.

3. Profilé d'assemblage selon une quelconque des revendications précédentes **caractérisé en ce que** l'élément d'assemblage (1, 2) comprend un section de serrage (10) s'insérant dans le conduit et une section d'accrochage (11) qui s'étend de la section de serrage (10) au-dessus de la surface supérieure (32) de la pièce profilée (3).

4. Profilé d'assemblage selon une quelconque des revendications précédentes **caractérisé en ce que** la section d'accrochage (11) comprend une section active (14) qui s'étend de la section de serrage (10) dans au moins un sens le long d'un axe central (12).

5. Profilé d'assemblage selon une quelconque des revendications précédentes **caractérisé en ce que** l'espace de réception (33) est limité par le conduit (31), la section d'accrochage (11), en particulier par la section active (14) et la section de serrage (10).

6. Profilé d'assemblage selon une quelconque des revendications précédentes **caractérisé en ce que** le conduit (31) oblong s'étend de la surface supérieure avec une première section (34) et une deuxième section (35) s'y raccordant dans la pièce profilée (3, 4), la première section (34) présentant une section transversale plus petite que la deuxième section (35).

7. Profilé d'assemblage selon une quelconque des revendications précédentes **caractérisé en ce que** la longueur de l'espace de réception (33) le long de l'axe central (30) correspond pour l'essentiel à la longueur (W) de la section active (14).

8. Profilé d'assemblage selon une quelconque des revendications précédentes **caractérisé en ce que** lorsque l'élément d'assemblage (1, 2) est en liaison avec la pièce profilée (1, 2), la section d'accrochage (11) s'étend dans le sens de l'axe longitudinal (30) de la pièce profilée respective (3, 4).

9. Profilé d'assemblage selon une quelconque des revendications précédentes **caractérisé en ce que** la section d'accrochage (11) présente une largeur (C) en travers du sens longitudinal qui est plus petite que la largeur (A) du conduit (31).

10. Profilé d'assemblage selon une quelconque des revendications précédentes **caractérisé en ce que** la section active (14) de la section d'accrochage (11) s'étend par rapport à la section de serrage (10) le long de l'axe longitudinal (12) dans un seul sens ou dans deux sens opposés.

11. Profilé d'assemblage selon une quelconque des revendications précédentes **caractérisé en ce que** la section de serrage (10) présente pour l'essentiel la forme d'un conduit (31) de sorte que l'élément d'assemblage (1) peut être introduit et est déplaçable le long du sens longitudinal (30) depuis la face avant dans le conduit (31).

12. Profilé d'assemblage selon une quelconque des revendications précédentes **caractérisé en ce que** la section de serrage (10) comprend des faces avant (106) disposées de façon angulaire par rapport à l'axe longitudinal (12), se situant à un intervalle (D) l'une de l'autre, l'intervalle (D) étant constitué plus petit que la largeur (A) du conduit (31) de sorte que l'élément d'assemblage (1) peut être introduit dans le conduit (31) perpendiculairement à l'axe longitudinal (30) et peut être ensuite orienté par un mouvement rotatif de telle sorte que l'axe central (12) de la section d'assemblage (10) passe parallèlement à l'axe longitudinal (30) de la pièce profilée (3,4).

13. Profilé d'assemblage selon une quelconque des revendications précédentes **caractérisé en ce qu'**à l'état assemblé, l'axe longitudinal (30) d'un premier profilé (3) passe parallèlement à l'axe longitudinal (30) d'un deuxième profilé (4).

14. Profilé d'assemblage selon une quelconque des revendications précédentes **caractérisé en ce que** l'élément d'assemblage (1) peut être assemblé avec un moyen de fixation, comme un système à vis (5), un système à ressort ou un système de serrage avec la pièce profilée respective, le moyen de fixation étant en prise avec la base du conduit (37) et l'élément d'assemblage appuyant avec les surfaces de contact (102) contre les âmes (36) du conduit (31).

15. Profilé d'assemblage selon une quelconque des revendications précédentes **caractérisé en ce que** l'élément d'assemblage (1) comprend une ouverture filetée (15) dans laquelle un goujon fileté (5) peut être placé, l'élément d'assemblage (1) pouvant être serrée avec le goujon fileté (5) en face du conduit (31), le goujon fileté se dressant sur la base du conduit (37) et l'élément d'assemblage (1) appuyant avec les surfaces de contact (102) contre les âmes (36) du conduit (31).
